Europäisches Patentamt

European Patent Office

Office européen des brevets

(11) Publication number: **0 032 636**
A1

## (12) EUROPEAN PATENT APPLICATION

(21) Application number: 80304766.1

(22) Date of filing: 30.12.80

(51) Int. Cl.³: **A 01 K 89/02**, A 01 K 89/00

(30) Priority: 17.01.80 US 112959

(43) Date of publication of application: 29.07.81
Bulletin 81/30

(84) Designated Contracting States: **DE FR GB IT SE**

(71) Applicant: **BRUNSWICK CORPORATION, One Brunswick Plaza, Skokie, IL 60077 (US)**

(72) Inventor: **Neufeld, Henry L., 6013 East 57th Place, Tulsa Oklahoma 74135 (US)**

(74) Representative: **Allden, Thomas Stanley et al, A.A. THORNTON & CO. Northumberland House 303-306 High Holborn, London WC1V 7LE (GB)**

(54) Drag system tension spring and clicker arm.

(57) A spin casting style fishing reel that has an integral drag system tension spring and clicker arm arrangement. The reel has a central deck plate and a central hub with a line spool (130) rotatably secured thereto. The drag system spring (210) is mounted between the spool (130) and the deck plate and exerts pressure on the spool (130) to prevent its relative motion with respect to the fishing reel hub by means of a clutch wheel arrangement (204, 201).

EP 0 032 636 A1

-1-

## BACKGROUND OF THE INVENTION

1. Field of the Invention

This invention relates to fishing reels, and more particularly, relates to a spin casting style fishing reel with a new improved drag system that incorporates a drag spring and clicker arm into one unit.

2. Background of the Prior Art

In John W. Puryear's United States Patent Application Serial No. 932,845, filed August 11, 1978, a circular drag spring having a cantilever leaf spring that has two fulcrum points defining a first and second linear spring portion is described. The cantilever spring arm provides the spring force for the drag system of the reel in order for the drag system to operate. The drag mechanism in this reel is located at the rear of the reel and is part of a free floating drag system. The clicker device that is part of the drag system is operated by a separate drag cup and clicker. In Dunkelberger et al's spinning style fishing reel described in the United States Patent No. 2,739,767, a three arm cantilever leaf spring arrangement is taught. The spring is located between the spool on the front of the reel and the spool securing nut. The leaf spring arms are simple single-acting springs and much less effective than the Puryear device.

In both of these prior art reels, clicker spring devices indicate that the spool is revolving relative to the hub are utilized, but in each case, a separate device for making the clicking sound is required since the drag tension springs do not perform such a function.

It has also been recognized that the smoothness with which fishing reel spools revolve when the drag is applied has never been very good. A great deal of chatter or vibration is normally experienced making catching of fish difficult for a fisherman. Thus, a smooth operating fishing reel drag system with a drag spring that also provides a clicker device is quite desirable but not provided in the prior art fishing reels.

### SUMMARY OF THE INVENTION

This invention relates to fishing reels and comprehends a very smooth operating fishing reel drag mechanism. The drag mechanism incorporates a clicker device that is integral with the drag spring.

It is therefore an object of this invention to provide a unique fishing reel spool drag plate bent into two sections providing a very sensitive spring action to the drag mechanism.

It is another object of this invention to provide a sensitive drag mechanism for a spin casting fishing reel utilizing such a sensitive type drag spring.

It is still another object of this invention to provide such a fishing reel drag system that incorporates a clicker mechanism as part of the drag spring.

It is still yet another object of this invention to provide such a drag spring with a cantilever drag spring arm that can be incorporated or coupled to the body of the central spring.

It is yet another object of this invention to provide such a drag spring that fits within a confined space between the deck plate of the fishing reel and the back of the spool.

It is yet still another object of this invention to provide such a drag spring where cantilever arm rides on serrations on the back of the spool producing a clicking sound when the spool rotates.

The above and other and further objects and features will be more readily understood by reference to the following detailed description and accompanying drawings.

## DESCRIPTION OF THE DRAWINGS

Figure 1 is an exploded perspective view of the spin casting style fishing reel containing the invention described herein;

Figure 2 is a perspective view of the invention described herein;

Figure 3 is a cut-away cross-sectional view of the drag spring facing the back of the fishing reel spool;

Figure 4 is a cross-sectional view taken along line 4-4 of Figure 3; and

Figure 5 is a graphic representation of a plurality of oscilloscope graphs of the vibrations of the drag systems of three prior art fishing reels and the drag system described herein incorporated in a fishing reel.

## DESCRIPTION OF THE PREFERRED EMBODIMENTS

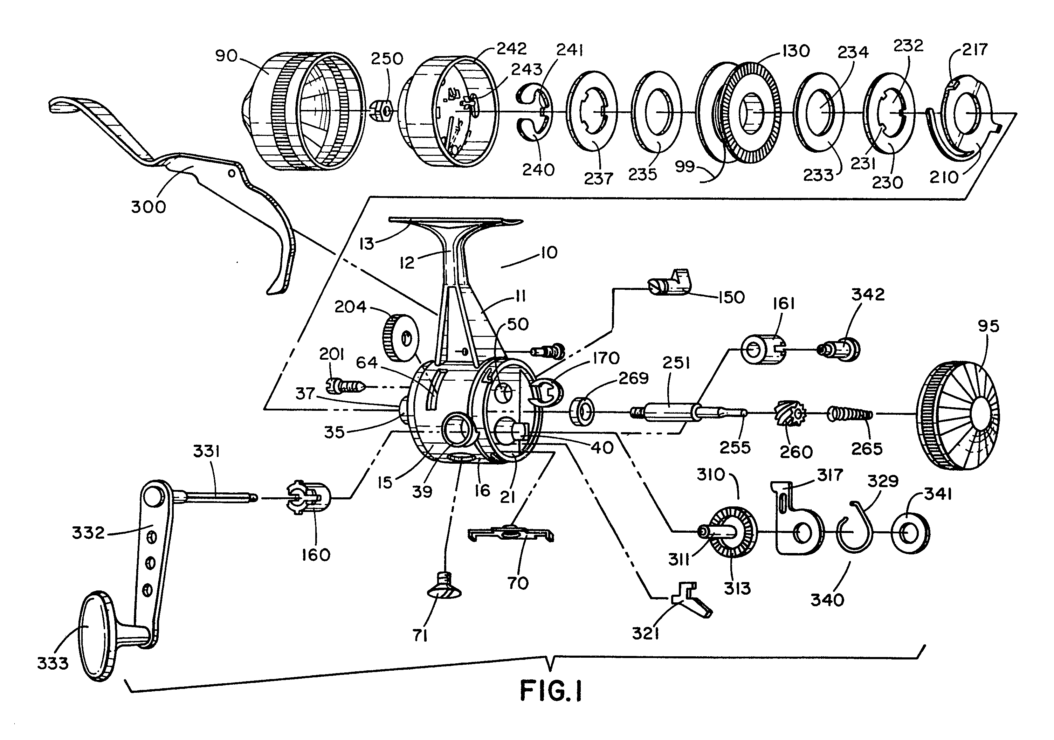

In a fishing reel 10 of the spin casting type containing the preferred embodiments of the invention, Figure 1 generally depicts an exploded perspective view of such a reel. A housing 11, preferably made of a plastic material such as acrylonitrile butadiene styrene (ABS) or glass-filled polycarbonate, has a center deck plate 14 with a forward and rear body portions 15 and 16. A central hub 35 projects forward of the deck plate 14 with a drag plate 210, back spool washer 230, back flat drag washer 233, spool assembly 130, front flat drag washer 235, front spool washer 237, all secured to the hub 35 by means of spool retainer clip 240 which fits into a groove (not shown in Figure 1). A center shaft 251 is mounted in a hole (not shown in Figure 1) in hub 35 with the spinner head 242 mounted on the forward threaded end of the shaft 251 by means of nut 250. The spinner head 242 partially surrounds the forward flange of the spool 130 with fishing line 99 being wound thereon. A front cover 90 secured on the first forward body portion 15 has a front hole (not shown in Figure 1) which acts as a fishing line guide as the line is cast from the reel and rewound after casting.

A clutch head screw 201 is mounted in the interior 21 of the second body portion 16 with clutch wheel 204 mounted on screw 201. Tab 217 fits into the head of screw 201 and when the clutch wheel 204 is revolved upward toward stem 12 and screw 201 advances forward toward the spool retainer clip 240 increasing the clamping force on the spool 130 so that the ability of spool 130 to revolve relative to the hub 35 is decreased. When the wheel 204 is revolved away from the stem 12, the clamping force is decreased and the spool 130 is permitted to revolve relative to hub 35 thus creating the drag mechanism for the fishing reel 10. The center shaft 251 is slidably and rotatably mounted in bearing 269 which is mounted in the deck plate 14. Slidably mounted on center shaft 251 in the second body portion is pinion gear 260 and maintained in place by the center shaft spring 265.

A finger brake lever 300 is mounted on the housing 11 exterior the first body portion 15 and inside the second body portion 16 and being in operable contact with the distal end 255 of the shaft 251. When the exterior portion of the lever 300 is pulled upward toward the mounting foot 13, the center shaft 251 and the spinner head mounted thereon are pushed forward relative to the bearing 269 and the hub 35. The pickup pin mechanism 243 mounted on spinner head 242 cooperates with the cam 37 mounted on the face of hub 35 to maintain the spinner head 242 in a forward position. In this forward position, the fishing line 99 can be cast from the reel 10.

Crank assembly 310 is coupled with the anti-reverse assembly 340 which comprises a ratchet (on the back side of face gear 313 and not shown in Figure 1), an anti-reverse drag arm 317, a drag spring 329 and spacer washer 341 all mounted on the hollow crank shaft 311. An anti-reverse pawl 321 is mounted in the deck plate 14 and received in between the back of the face gear 313 and drag arm 317 for engageable and disengageable contact with the ratchet. The crank assembly 310 is mounted in bearing supports 39 and 40 by sliding between slots in the supports 39 and 40. Crank bearings 160 and 161 mounted in supports 39 and 40 provide suitable bearings for the hollow shaft 311. A crank rod 331 is slip fitted into the hole in shaft 311 and keyed thereto. Crank rod nut 342 is secured to the threaded end to fasten rod 331 to the reel 10. The rod 331 is connected to the crank handle 332 and crank knob 333. The gear 313 is in engageable contact with pinion 260 so that when the crank handle 332 and knob 333 are rotated in the forward direction (toward the front cover), the crank shaft 251 rotates causing the spinner head 242 to rotate as well. This rotative motion disengages the pickup pin mechanism 243 from the hub 35 cam 37 causing the spinner head 242 and shaft 251 to move rearward. This same motion causes the pickup pin of the mechanism 243 to extend outwardly beyond the spinner head 242 so that the fishing line 99 can be wound on the spool 130.

Anti-reverse actuator 150 is mounted in upper housing hole 50 and retained therein by retainer clip 170. The actuator 150 is in cooperative contact with the anti-reverse drag arm 317. In one position the actuator 150 disengages the anti-reverse assembly 340 permitting the crank rod 331 and the crank assembly to rotate in either the forward direction (upward toward the stem 12) or the reverse direction (downward from the stem 12 toward the back of the reel).

A back cover 95 is secured on the second back portion 16 to enclose the reel 10. Cover lock 70 is mounted within the housing 11 and is tightened in place by screw 71 clamping the covers 90 and 95 to the housing.

The purpose of the drag mechanism is to permit the fisherman to play the fish caught on the end of the line without breaking the fishing line; thus, limited rotation of the spool relative to the fishing reel hub is required. The degree of drag or freedom to rotate is governed by the fisherman when selecting the amount of drag required. In a preferred embodiment of this invention, a new and novel drag assembly for a spin casting style fishing reel utilizes a new and novel drag plate 210 which has a periphery 218 and a center hole 212 defining a body portion 213. The body portion 213 is bent near the center further defining first and second semi-sections 214 and 215 that are each substantially planar but are non-planar with respect to each other. Thus, as used herein, the term "non-planar semi-section" or "non-planar semi-circle" refers to the configuration of 214 and 215 which meet at bend line 210a or bearing surface 219. This portion forms a metal disk 211 and the spring aspect of drag plate 210. The plate 210 has first and second tabs 216 and 217 bent approximately 90° to the plate 210 and extending in a first direction. Cantilever arm 220 has a proximal end 221 secured to drag plate 210 by coupling 222 and has a distal end 223 with tip 224 bent in a second direction relative to the bent tabs 216 and 217.

The deck plate 14 has two holes 33 and 34 and a triangular section 68 with a hole 69. The holes 69 and 33 are coaxial. The clutch screw head 201 is positioned in hole 33 with threaded shank positioned in and supported by hole 69. Threaded clutch wheel hole 205 is received on threaded shank 203 and mounted so that part of the clutch wheel protrudes through the slot 64 on the exterior of the body portion 15. When the drag plate 210 is positioned on hub 35, the tab 216 fits into hole 34 and tab 217 fits into slot 207 of screw 201. Adjacent the drag plate 210 on the hub 35 is the back spool washer 230 with hole 232 and the aligning prongs 231 that mates with slot 38 to prevent the washer from rotating. Adjacent the washer 230 is back drag washer 233 with hole 234 for mounting on hub 35. The spool 130 is mounted on hub 35 adjacent the drag washer 233 and next in line comes the front drag washer 235 followed by the front spool washer 237 with the aligning prongs to prevent the washer from rotating relative to the hub. Retainer clip 240 is press-fitted into groove 36; preferably, the retainer is C-shaped with three positioning prongs 241.

The spring face 219 at the bend 210a of the drag plate 210 bears against the outer surface 135 of flange 133 by means of interaction between the washers 230 and 233. As the wheel 204 is revolved in one direction, the slotted clutch head 202 moves forward of the deck plate 14 moving the drag plate 210 toward the retainer clip 240 tightly clamping the spool 130 between the non-rotary washers 230 and 237 and the low-friction disk washers 233 and 235. Preferably, the washers 233 and 235 are made from a low-friction plastic material such as teflon or nylon.

As the screw head 202 is advanced forward toward the front of the reel, the tab 217 is forced forward. This movement in turn causes the bent line 210a or the spring bearing surface 219 to push on the washer 230. Preferably, the washer 230 is made of metal to help equalize pressure on the friction washer 233. This forward motion of the screw head 202 causes a tight clamping force on the spool 130 preventing its rotation relative to the hub 35.

As the clutch wheel 204 rotates in the opposite direction, the screw head 202 retracts toward the back of the reel decreasing the clamping pressure thus permitting the spool 130 to revolve relative to the hub 35. This arrangement constitutes the drag mechanism for the fishing reel described herein but is adaptable to any spin casting or spinning style fishing reel.

A further embodiment contemplated by this invention is a provision that the outer surface 138 of the spool 130 has a plurality of radial serrations 139. The drag plate 210 has a cantilever arm 220 that follows the contour or periphery 218 of the plate 210. The arm 220 projects in a second direction opposite to the tabs 216 and 217. The bent tip 224 contacts the serrations 139. The arm 220 extends outside the periphery of the washers 230 and 233. When the drag mechanism is set to permit the spool 130 to rotate when a fish is caught on the end of the line 99, the serrations 139 of the spool 130 progressively cause the tip 224 and concomitantly the arm 220 to vibrate. This vibration causes a clicking sound that is reinforced and amplified by the deck plate 14.

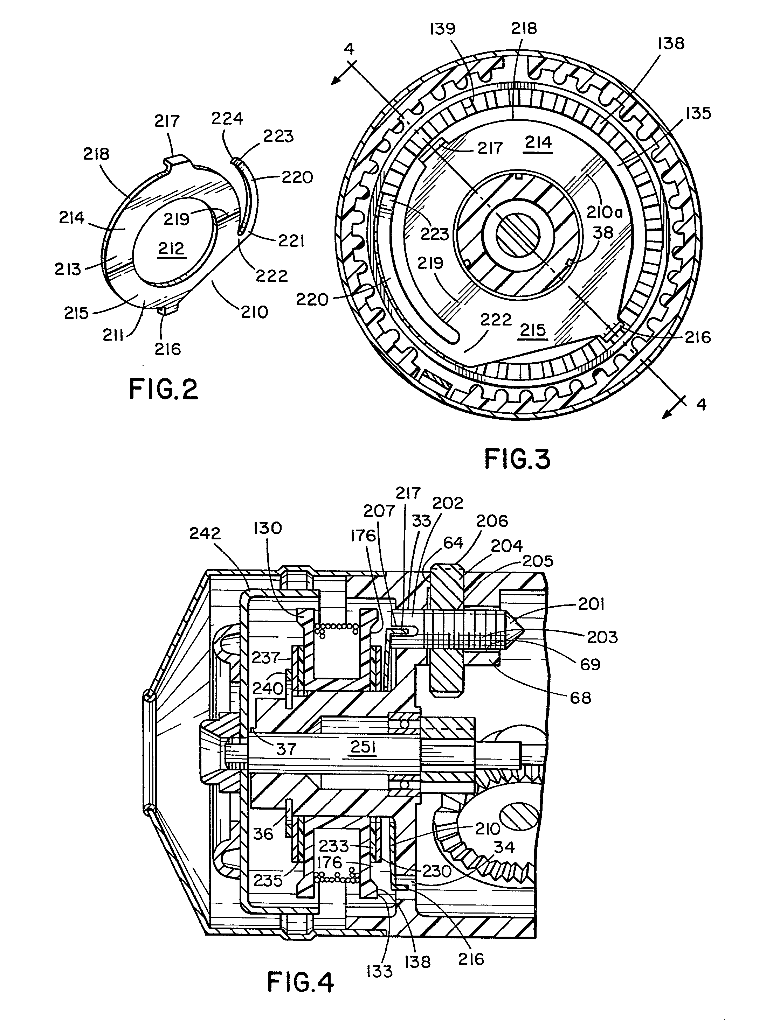

Thus, as the spool 130 rotates relative to the hub 35, a clicking sound is generated warning the fisherman that the drag mechanism is set low and the spool 130 is revolving. It has been found that the drag plate 210 can be made circular as shown in the Figures 2 and 3, if desired. When the plate 210 is substantially circular, the semi-sections 214 and 215 are semi-circular in shape still maintaining the bent line 210a or primary spring surface 219. It has been further found advantageous to make the plate 210 from material such as spring quality stainless steel, spring hardened brass, spring steel (plated or unplated) and the like.

In another embodiment, such as depicted in Figure 4, the outer surface 138 of spool 130 can be undercut as shown as 176. This undercut 176 permits the drag plate 130, the washer 230 and the washer 233 to be thicker and thus able to apply a more uniform drag pressure against the spool 130.

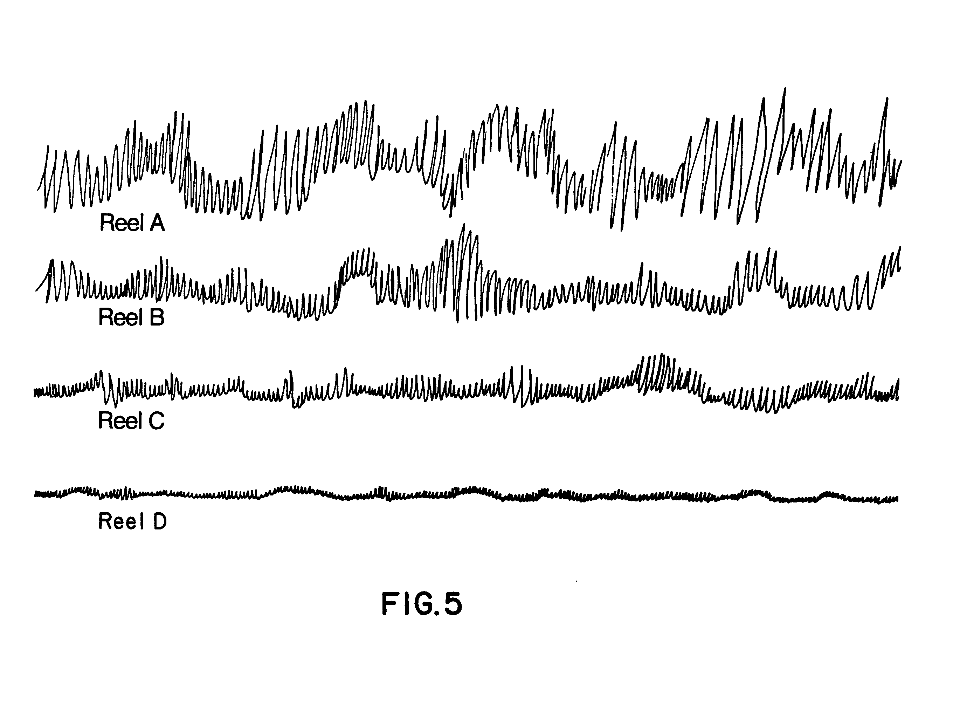

Tests have been performed on the steadiness of the drag arrangement of this invention compared to the prior art fishing reel drag systems. The smoothness of the drag system comprehended by this invention is depicted in Figure 5 compared to other prior art reels. The oscilloscopic charts depict the vibration patterns measured by the spool slippage on hubs of various fishing reels. Patterns A, B and C depict the prior art reels and the pattern of Reel D depicts the drag system of this invention. The comparative smoothness of Reel D can readily be observed in Figure 5. The smoothness of such a drag system can especially be appreciated by fishermen when trying to catch prize fish.

It should be understood, of course, that the specific forms of the invention illustrated and described herein are intended to be representative only, as certain changes and modifications may be made without departing from the scope of the teachings herein disclosed.

Accordingly, reference should be made to the appended claims in ascertaining the full scope of the invention.

Claims

1. A fishing reel spool drag plate comprising:

(a) a metal disc spring having a center hole, a periphery and a body portion therebetween, the body bent forming two non-planar semi-sections;

(b) a first tab secured to the periphery and projecting approximately 90 degrees relative to the body portion in a first direction;

(c) a second tab secured to the periphery, projecting about 90 degrees to the body portion in the first direction and diametrically opposite the first tab;

(d) a thin cantilever arm extending radially outwardly from the periphery a short distance and following the periphery of the spring and being projected radially outwardly therefrom, the arm having a proximal end and a distal end, the distal end having a tip bent in a second direction opposite to the first direction, the arm curved outward in the second direction; and,

(e) a coupling connecting the proximal end to the periphery.

2. A closed face spinning reel of the type comprising:

(a) a forwardly projecting central hub;

(b) a spool for holding fishing line mounted on the hub;

(c) means for retaining the spool on the hub;

(d) means for retarding rotary motion of the spool relative to the hub and being adjacent to the spool;

the improved retarding means being a spool drag
plate comprising:

> (1)   a metal disc spring having a center hole,
> a periphery and a body portion therebe-
> tween, the body bent forming two non-
> planar semi-sections;
>
> (2)   a first tab secured to the periphery and
> projecting about 90 degrees relative to
> the body portion in a first direction;
>
> (3)   a second tab secured to the periphery,
> projecting about 90 degrees to the body
> in a first direction and diametrically
> opposed to the first tab;
>
> (4)   a cantilever arm extending radially out-
> wardly from the periphery a short distance
> and following the periphery of the spring
> and being projected radially outwardly
> therefrom, the arm having a proximal end
> and a distal end, the distal end having a
> tip bent in a second direction opposite
> to the first direction, the arm curved
> outward in the second direction;
>
> (5)   a coupling connecting the proximal end
> to the periphery.

3.  A closed face spinning reel comprising:

(a)  a housing having a deck plate and body portions
with exterior and interior surfaces, a first
portion projecting forward of the plate and a
second portion projecting rearward of the plate,
the second portion having slot means between the exterior and interior surfaces parallel to the deck, the deck having a first hole adjacent to slot and a second hole diametrically opposed to the first hole;

(b) a hub mounted on the deck projecting forward and concentric with the first portion;

(c) a spool having a central section and a rearward flange secured thereto, the spool mounted on the hub and the flange spaced from the deck;

(d) means for securing the spool on the hub and permitting rotation of the spool relative to the hub;

(e) a clutch screw having a slotted head and a threaded shank, the head positioned in the deck plate with the slot forwardly directed and the shank rearwardly directed into the second portion;

(f) a clutch wheel having a threaded hole to receive the threaded shank and mounted in the slot, a portion of the wheel extending beyond the exterior surface;

(g) a drag plate mounted on the hub between the rearward flange and the deck, the plate comprising:

(1) a metal spring disc having a center hole, a periphery and a body portion therebetween, the body bent in a first direction forming two non-planar semi-sections,

     (2)   a first tab secured to the periphery and bent approximately 90 degrees relative to the body portion in the second direction, the tab received in the second hole,

     (3)   a second tab secured to the periphery, bent approximately 90 degrees relative to the body portion in the second direction and diametrically opposed to the first tab, the second tab being received in the slot of the clutch screw.

4.   The device of claims 1, 2 or 3 wherein the periphery is circular and the semi-sections are semi-circular.

5.   The reel of claim 3 wherein when the screw head is advanced forward the spring bears against the spool limiting the rotation thereof.

6.   The reel of claims 2 or 5 further including:

     (a)   a curved cantilever arm extending radially outwardly from the periphery of the spring a short distance and contoured such that it follows the periphery of the spring and projecting radially outwardly therefrom, the arm having a proximal end and a distal end; and,

     (b)   a coupling connecting the proximal end to the periphery.

7.   The reel of claim 6 wherein the distal end has a bent end in a first direction opposite to the second direction.

8.   The reel of claim 7 wherein the rearward spool flange has an inner and outer surface.

9. The reel of claim 8 wherein the flange has a circular periphery.

10. The reel of claim 8 wherein the outer circular periphery has a plurality of serrations.

11. The reel of claim 10 wherein the cantilevered tip engages the serrations.

12. The reel of claim 11 wherein the cantilever vibrates making a clicking sound when the spool rotates relative to the hub.

13. The reel of claim 11 wherein the first tab is larger than the second tab and fits in the screw slot.

14. The reel of claim 13 wherein the spool has a forward flange spaced from the rearward flange defining a fishing line holding area.

15. The reel of claim 15 wherein the means for securing the spool comprises a circular groove on the forward into the hub and a retainer clip mounted therein.

16. The reel of claim 15 further including a bracket mounted in the second portion adjacent the wheel and screw and providing bearing support for the shank end of the screw.

FIG.1

FIG.2

FIG.3

FIG.4

Reel A

Reel B

Reel C

Reel D

FIG.5

| Category | Citation of document with indication, where appropriate, of relevant passages | Relevant to claim |
|---|---|---|
| A | US - A - 4 156 510 (R. DELL HULL)<br>* column 4, lines 48 to 63; fig. 1 *<br>— | |
| A | US - A - 3 297 275 (T.F. SARAH)<br>* column 3, lines 64 to 75; fig. 4 *<br>— | |
| D,A | US - A- 2 739 767 (M.E. DUNKELBERGER .et al.)<br>* column 2, lines 26 to 33; fig. 2 *<br>————— | |

# DOCUMENTS CONSIDERED TO·BE RELEVANT

**CLASSIFICATION OF THE APPLICATION (Int. Cl.³)**

A 01 K   89/02

A 01 K   89/00

**TECHNICAL FIELDS SEARCHED (Int. Cl.³)**

A 01 K   89/00

**CATEGORY OF CITED DOCUMENTS**

X: particularly relevant

A: technological background

O: non-written disclosure  .

P: intermediate document

T: theory or principle underlying the invention

E: conflicting application

D: document cited in the application

L: citation for other reasons

&: member of the same patent family, corresponding document

X | The present search report has been drawn up for all claims

| Place of search | Date of completion of the search | Examiner |
|---|---|---|
| Berlin | 13-04-1981 | LEITHÄUSER |

EPO Form 1503.1   06.78